# EUROPÄISCHE PATENTSCHRIFT

(11) **EP 1 035 716 B1**
(45) Veröffentlichungstag und Bekanntmachung des Hinweises auf die Patenterteilung: **19.07.2017**
(21) Anmeldenummer: 00250081.7
(22) Anmeldetag: 06.03.2000
(51) Int. Cl.: H04M 3/493

(54) **Verfahren und Sucheinrichtung zur Rufnummernauskunft**
Method and search apparatus for directory assistance
Méthode et appareil de recherche pour l'assistance annuaire téléphonique

(30) Priorität: 12.03.1999 DE 19912782
(43) Veröffentlichungstag der Anmeldung: 13.09.2000
(73) Patentinhaber: Vodafone Holding GmbH, 40213 Düsseldorf (DE)
(72) Erfinder: Rosenberger, Frank, 40668 Meerbusch-Lank (DE)
(74) Vertreter: Weisbrodt, Bernd

(56) Entgegenhaltungen:
- EP-A- 0 782 315
- EP-A- 0 851 696
- EP-A- 0 872 998
- WO-A-98/30008
- US-A- 4 817 129
- US-A- 5 689 547

## Beschreibung

Die Erfindung betrifft ein Verfahren zum Ermitteln einer Telekommunikationsteilnehmer-Anschlußkennung eines Telekommunikationsteilnehmers für einen hiernach anfragenden Telekommunikationsteilnehmer mit den Merkmalen des Oberbegriffs des Anspruchs 1 und eine Sucheinrichtung zum Durchführen des Verfahrens mit den Merkmalen des Oberbegriffs des Anspruchs 30.

Für die Ermittlung von Telekommunikationsteilnehmer-Anschlußkennungen (insbesondere Telefonnummern, Fax-Nummern und evtl. E-Mail-Adressen) eines Telekommunikationsteilnehmers, von welchem lediglich Daten bezüglich seines Namens und/oder seine Adresse bekannt sind, sind neben herkömmlichen Telefonbüchern bisher verschiedene endgerätseitige Sucheinrichtungen mit Telekommunikationsteilnehmer-Anschlußkennungen einerseits und Namen/Adressen andererseits aufweisenden Korrespondenzdateien bekannt. Insbesondere sind auf CD-Rom abgelegte und auf einem PC installierbare Sucheinrichtungen mit Korrespondenzdateien in Form elektronischer Telefonbücher bekannt. Im Mobilfunkbereich sind auf den teilnehmerindividualisierten SIM-Karten abgelegte Korrespondenzdateien umfassende elektronische Telefonbücher sowie bei modernen Mobilfunkendgeräten in diesen selbst abgelegte elektronische Telefonbücher bekannt.

Aus der US 5,689,547 ist ein zellulares Mobilfunknetz bekannt, bei dem seitens des Mobilfunknetzes eine eine Vielzahl von Telefonnummern aufweisende Datenbank bereitgestellt wird. Auf die Datenbank können Mobilfunkteilnehmer mit einem Mobilfunkendgerät über das Mobilfunknetz zugreifen, um die Telefonnummer eines bestimmten anderen Telekommunikationsteilnehmers abfragen zu können. Dabei ist vorgesehen, dass Telefonnummern in der Datenbank des Mobilfunknetzes allgemein zugänglich oder nur für bestimmte Teilnehmer zugänglich sind. Der Zugriff auf die Datenbank erfolgt mittels einer Suchanfrage, welche vom Mobilfunkendgerät eines anfragenden Mobilfunkteilnehmers über das Mobilfunknetz zur Datenbank übermittelt wird. Die auf die Suchanfrage aus der Datenbank ermittelte Antwort wird dann über das Mobilfunknetz an das Mobilfunkendgerät des anfragenden Mobilfunkteilnehmers übermittelt. Die übermittelte Antwort kann dann seitens einer Speichereinrichtung des Mobilfunkendgerätes gespeichert bzw. seitens einer Anzeigeeinrichtung des Mobilfunkendgerätes wiedergegeben werden.

Die EP 0 872 998 A1 offenbart ein sogenanntes Active-User-Registry-System (AUR-System) welches in einem sogenannten POTS-Netzwerk (POTS: Plain Old Telephone Service) und in einem sogenannten Paket-Netzwerk wie dem Internet integriert ist. Das AUR-System weist dabei eine Datenbank auf, in welcher erfasst ist, auf welche Art und welche Weise Teilnehmer im POTS-Netz und/oder im Internet für eine Kommunikation erreichbar sind. Das AUR-System kann ferner hinsichtlich der Kommunikation zwischen Teilnehmern vermittelnd tätig werden.

Die EP 0 851 696 A2 offenbart ein Verfahren zur Bereitstellung von Daten als Reaktion auf eine Anforderung von einem in einem Mobilfunknetz betriebenen mobilen Endgerät. Dabei werden die Daten in einer Datenbank eines öffentlichen Festnetzes (PSTN) bereitgestellt, welches mit dem Mobilfunknetz verbunden ist. Die Anforderung von Daten aus der Datenbank erfolgt ausgehend von dem mobilen Endgerät über das Mobilfunknetz und das Festnetz (PSTN) zu einer die Datenbank unterhaltenden Einrichtung (Provider) im Festnetz (PSTN). Die Einrichtung (PSTN) im Festnetz erhält dabei ferner eine Information zur Identifizierung des das mobile Endgerät nutzenden Teilnehmers, welche von der Einrichtung (PSTN) zur Bestimmung des Empfangsziels der angeforderten Daten genutzt wird. Die Daten in der Datenbank des Festnetzes (PSTN) sind Informationen betreffend Nachrichten, Sport, Wetter, Verkehr oder dergleichen.

Aus der WO 98/30008 A1 ist ein System zum Austausch von Sprachdaten zwischen Teilnehmern über das Internet bekannt, um sogenannte Internet-Telefonie-Funktionen zu ermöglichen. Um dabei die Adressierung von Teilnehmern zu vereinfachen ist im Internet eine Sucheinrichtung vorgesehen, welche eine Datenbank mit Internetadressen von Teilnehmern unterhält. Die Sucheinrichtung ist dabei derart ausgebildet, dass nur autorisierte Nutzer Zugriff auf die Datenbank erhalten. In der Datenbank sind den Namen von Teilnehmern deren zugehörige Internetadresse zugeordnet.

Aufgabe der Erfindung ist die Schaffung eines möglichst einfachen und kostengünstigen und dabei leistungsfähigen telekommunikationsteilnehmerindividualisierbaren elektronischen Telefonbuches. Die Aufgabe wird durch die Gegenstände der unabhängigen Ansprüche 1 bzw. 30 gelöst.

Die Erfindung ermöglicht, für eine telekommunikationsnetzseitige Implementierung einer Sucheinrichtung und Korrespondenzdatei für Telekommunikationsteilnehmer-Anschlußkennungen (insbesondere Festnetznummer, Mobilfunk-Telefonnummer und E-Mail-Nummer) einerseits und andererseits Namendaten und/oder Adreßdaten eine für jeweils einen Teilnehmer einheitliche Telefonbuchfunktion, welche gegenüber den bisher üblichen getrennten mehreren Telefonbüchern eines Teilnehmers in Endgeräten (beispielsweise in der SIM-Karte seines Mobilfunktelefons, im Mobilfunktelefon, im Festnetztelefon, in einer Adreßdatei, in einem beruflich verwendeten Rechner und in einem weiteren privat verwendeten Rechner) den Vorteil hat, vollständig, im Detail aktualisiert und von unterschiedlichen Medien aus zugreifbar realisierbar zu sein. Weitere Merkmale und Vorteile der Erfindung ergeben sich aus den Unteransprüchen.

Als Vorrichtung kann die Erfindung insbesondere mit einer Sucheinrichtung mit Korrespondenzdatei in einem Telekommunikationsnetz (insbesondere Mobilfunknetz) ausgebildet sein. Insbesondere kann eine Sucheinrichtung (beispielsweise ein Server) in einer telekommunikationsnetzseitig vorhandenen Einrichtung untergebracht werden. In einer Mobilfunkeinrichtung ist hierfür insbesondere eine zenrale Einrichtung des Netzes, wie beispielsweise eine NMC geeignet. Jedoch wäre auch eine Unterbringung in den HLRs des Telekommunikationsnetzes oder in einer über das Telekommunikationsnetz zugänglichen Einrichtung möglich. Die Sucheinrichtung ist beispielsweise als an sich bekannte alphanumerische Sucheinrichtung, beispielsweise in Form eines Programmes, ausbildbar, jedoch weder durch die Ausbildung als Programm charakterisiert noch dadurch beschränkt.

Weitere Merkmale und Vorteile der Erfindung ergeben sich aus der nachfolgenden Beschreibung eines Ausführungsbeispiels anhand der Zeichnung. Dabei zeigt:
- Fig. 1: die Struktur eines zur erfindungsgemäßen Ermittlung einer Telekommunikationsteilnehmer-Anschlußkennung geeigneten Telekommunikationsnetzes,
- Fig. 2: beispielhaft in einer Korrespondenzdatei in oder für eine Sucheinrichtung abgelegte Daten.

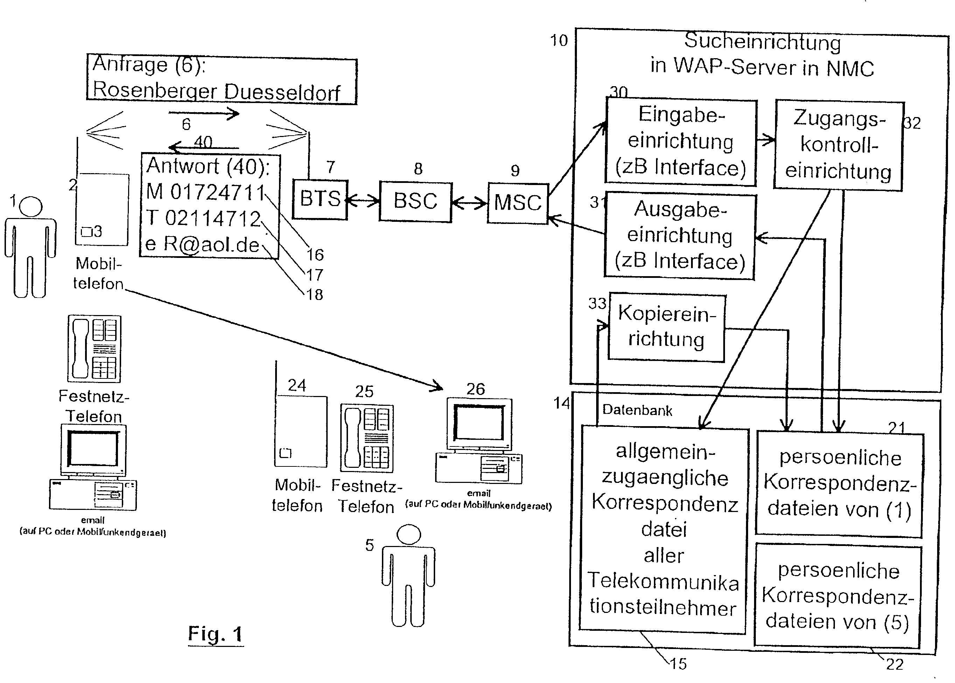

In Figur 1 sendet ein Telekommunikationsteilnehmer 1 von seinem Telekommunikationsendgerät 2 (hier in Form eines Mobilfunkendgerätes 2 mit einer SIM-Karte 3) eine Anfrage 6 nach einer Telekommunikationsteilnehmer-Anschlußkennung (universale Telekommunikationsteilnehmer-Anschlußkennung und/oder Mobilfunkkarten-Telefonnummer und/oder E-Mail-Nummer und/oder Festnetznummer) über einen Telekommunikationskanal (hier in Form eines Mobilfunkkanales mit einer Funkstrecke 6, einer Basisstation 7, BSC 8, MSC 9) an eine Sucheinrichtung 10 (in Form eines Servers). Der Server 10 sucht aufgrund von in der Anfrage 6 enthaltenen, z.B. den Namen, die Adresse und/oder weitere Aspekte betreffende Anfragedaten 11, 12 in einer beim Server 10 angeordneten oder vom Server 10 über ein Telekommuniktionsnetz zugreifbaren zentralen (in einer NMC) oder verteilten (beispielsweise in den HLR eines Mobilfunknetzes) Datenbank 14, welche eine oder mehrere Korrespondenzdateien (von Namen und Adressen 11 bis 13 einerseits und zugeordneten Telekommunikationsteilnehmer-Kennungen 16, 17, 18 andererseits) enthält nach zur Anfrage 6 passenden Antwortdaten (umfassend 16, 17, 18). Die Datenbank 14 kann eine für alle Telekommunikationsteilnehmer 1 zugängliche Datenbank mit beispielsweise Telekommunikationsteilnehmer-Anschlußkennungen aller oder zumindest der meisten Telekommunikationsteilnehmer enthalten. Alternativ oder zusätzlich kann sie für jeden Telekommunikationsteilnehmer 1, 5 eine nur diesem (1, 5) zugängliche persönliche Korrespondenzdatei 21, 22 aufweisen, welche für den Telekommunikationsteilnehmer 1 beispielsweise aufgrund der mit der Anfrage 6 übermittelten CLIP und/oder eines Paßwortes zugänglich sein kann.

Es können für einen Telekommunikationsteilnehmer mit mehreren Telekommunikationsteilnehmer-Anschlußkennungen (mehrere Telefonnummern und/oder E-Mail-Adressen) in 32 diese als nebeneinander mögliche Zugangsmöglichkeiten 21 durch CLIP gespeichert sein und geprüft werden.

Eine persönliche Korrespondenzdatei kann auch von der Sucheinrichtung 10 voreingestellt automatisch jeweils bei einem Anrufer eines Telekommunikationsteilnehmers als erste Datei (z.B. vor 15 als Fallback) zugegriffen werden. Das Ergebnis der Suchabfrage der Sucheinrichtung 10 in einer Korrespondenzdatei 15, 21, 22 wird als Antwort 40 dem Telekommunikationsteilnehmer (beispielsweise über 9, 8, 7, 5) über einen Telekommunikationskanal des Telekommunikationsnetzes mitgeteilt. Die Antwort 40 kann entweder über den gleichen Telekommunikationskanal wie die Anfrage 6 oder über einen anderen Telekommunikationskanal erfolgen. Beispielsweise kann eine Anfrage über einen Mobilfunk- oder Festnetzkommunikationskanal, insbsondere mit CLIP wegen der hohen Sicherheit) erfolgen und auf Wunsch eine Antwort an einen anderen Anschluß oder Computer des Telekommunikationsteilnehmers übermittelt werden, um von dort aus einen unmittelbaren Internet-Zugriff auf die in der Antwort enthaltene Adresse zu ermöglichen. Jedoch kann das Telekommunikationsendgerät 3 auch universell, also als Mobilfunkendgerät zur Übertragung von Sprache, als internetfähiger (über Festnetz und/oder Mobilfunk kommunizierender) Computer und evtl. ferner als zur Mobilfunk- und/oder Festnetzkommunikation über Sprache geeignetes Endgerät ausgebildet sein.

Wenn im vorliegenden Beispiel der Telekommunikationsteilnehmer 1 die Mobilfunkkennung 23 der SIM-Karte 24 des gesuchten Telekommunikationsteilnehmers 5 erhielt, kann er nach der Antwort 40 diesen (5) per Mobilfunk anrufen; ebenfalls kann er den Teilnehmer 5 unter dessen Festnetzanschluß 25 (über die in der Antwort enthaltene Nummer 16) oder per E-Mail auf dessen internetfähigem Endgerät 26 unter der E-Mail-Adresse 18 anrufen bzw. kontaktieren.

Die Sucheinrichtung 10 kann beispielsweise so ausgebildet sein, daß bei einem Suchergebnis auf eine Anfrage 6 hin, welches Suchergebnis maximal eine vorgegebene Zahl (beispielsweise 10) von Ergebnissen (in Form von Telekommunikationsteilnehmer-Anschlußkennungen unterschiedlicher Telekommunikationsteilnehmer) enthält, in der Antwort 40 alle Ergebnisse übermitteln. Die Sucheinrichtung kann auch so ausgebildet sein, daß sie den Telekommunikationsteilnehmer zunächst über die Zahl der Ergebnisse informiert und abfragt, wieviele er als Antwort 40 bekommen möchte oder ob er alle bekommen möchte. Die Sucheinrichtung kann auch so eingestellt sein, daß sie zunächst bei mehr als z.B. zehn Ergebnissen automatisch beim anfragenden Telekommunikationsteilnehmer 1 nachfragt, ob er zusätzliche Daten eingeben kann, alle Ergebnisse als Antwort haben möchte oder eine bestimmte Zahl als Antwort haben möchte.

Die Sucheinrichtung kann insbesondere so ausgebildet sein, daß sie nicht definierte Stellen in der Anfrage (wild charts) enthalten kann, welche in anderen Applikationen üblicherweise mit einem * oder einem ? angegeben werden und ausdrücken, daß an dieser Stelle in der Antwort eine beliebige Zahl oder ein beliebiger Buchstabe stehen kann.

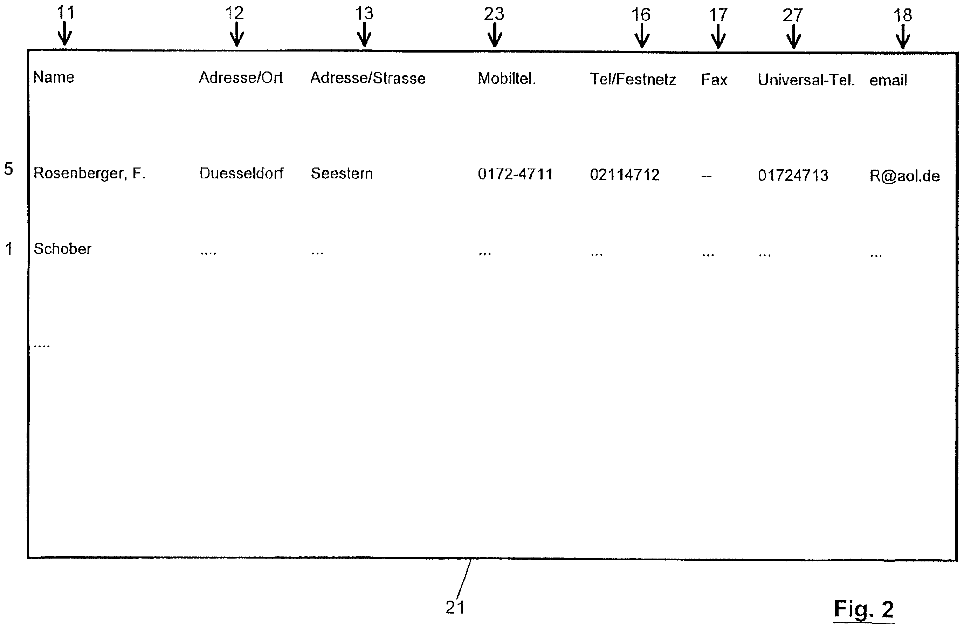

Figur 2 zeigt ein Beispiel einer (z.B. persönlichen) Korrespondenzdatei 21 in oder für eine Sucheinrichtung, welche Korrespondenzdatei für Telekommunikationsteilnehmer einserseits Namens- und Adreßeinträge und andererseits
Telekommunikationsteilnehmer-Anschlußkennungen (Telefon, Fax, E-Mail, universelle Telekommunikations-Nummer) enthält. Wenn die Anfrage beispielsweise "Rosenberger, Düsseldorf", enthält, kann eine Sucheinrichtung hierzu den Eintrag in der ersten Zeile als einzigen Treffer auffinden, weicher in unterschiedlichen Spalten diese Suchbegriffe enthält. Als Antwort können beispielsweise Telefonnummer, Fax, E-Mail, Bemerkungen, Name, Adresse übermittelt werden. Alternativ zur Übermittlung aller Daten eines Teilnehmers können auch nur bestimmte voreingestellte oder in der Anfrage angegebene Daten als Antwort rückübermittelt werden. Die Sucheinrichtung kann die Korrespondenzdatei beispielsweise als Textdatei oder als Datenbankdatei (Access, Excel etc.) enthalten. Die Suche kann beispielsweise alphanumerisch auf vollständige oder Teilübereinstimmung mit dem Suchbegriff in der Datei bzw. mehreren Spalten der Datei in an sich bekannter Weise erfolgen.

## Patentansprüche

1. Verfahren zum Ermitteln einer Telekommunikationsteilnehmer-Anschlusskennung (16, 17, 18, 23) eines TelekommunikationsTeilnehmers (5) für einen anfragenden anderen TelekommunikationsTeilnehmer (1) mit einem
Telekommunikationsendgerät (2, 3) auf dessen (1) Anfrage (6) hiernach (16 bis 18, 23) hin
durch Suche (10) von in der Anfrage (6) des anfragenden Telekommunikationsteilnehmers (1) enthaltenen Anfragedaten (11, 12) betreffend den gesuchten Telekommunikationsteilnehmer (5) in einer zumindest Telekommunikationsteilnehmer-Anschlusskennungen (16, 17, 18, 23, 27) von Telekommunikationsteilnehmern (1, 5, ...) enthaltenden allgemeinen Korrespondenzdatei (15) und/oder persönlichen Korrespondenzdatei (21, 22) in einer über ein Telekommunikationsnetz (6, 7, 8, 9) zugreifbaren Datenbank (14),
wobei die Anfrage (4) des anfragenden Telekommunikationsteilnehmers (1) von dessen Endgerät (2, 3) über das Telekommunikationsnetz (6, 7, 8, 9) bis zu einer die Korrespondenzdatei (15; 21; 22) aufweisenden Sucheinrichtung (10) übermittelt wird,
worauf von der Sucheinrichtung (10) die mindestens eine zur Anfrage (4) passende Telekommunikationsteilnehmer Anschlusskennung (16 bis 18, 23, 27) als Antwort (40) an ein Telekommunikationsendgerät (2, 3) des anfragenden Telekommunikationsteilnehmers (1) zur dortigen Darstellung für den Telekommunikationsteilnehmer (1) übermittelt wird, **dadurch gekennzeichnet,**
**dass** nach einer Anfrage (6) eines Telekommunikationsteilnehmers (1) bei der Suche (10) gefundene Antwortdaten (16 bis 18, 23) oder vollständige diese enthaltende Einträge (11, 12, 13, 21, 16, 17, 18, 23, 27, 4) in der angefragten und durchsuchten allgemeinen Korrespondenzdatei (15) automatisch oder nur nach Rückfrage beim Telekommunikationsteilnehmer (1) in dessen private nur ihm zugängliche persönliche Korrespondenzdatei (Telefonbuch 21) im Telekommunikationsnetz (6, 7, 8, 9) kopiert werden.

2. Verfahren nach Anspruch 1,
**dadurch gekennzeichnet,**
**dass** die Übermittlung der Anfrage (6) vom Endgerät (2, 3) des anfragenden Telekommunikationsteilnehmers (1) zur Sucheinrichtung (10) im oder am Telekommunikationsnetz (6, 7, 8, 9) sowie die Suche und überdies die Übermittlung der Antwort (40) vollautomatisiert ohne Zwischenschaltung von von Menschen ausgeführten Zwischenschritten erfolgt.

3. Verfahren nach Anspruch 1 oder Anspruch 2,
**dadurch gekennzeichnet,**
**dass** das Endgerät ein GSM-kompatibles und/oder UMTS-kompatibles und/oder WAP-kompatibles Mobilfunkendgerät (2, 3) ist und dass das Telekommunikationsnetz ein GSM-kompatibles und/oder UMTS-kompatibles und/oder WAP-kompatibles Mobilfunknetz (6, 7, 8, 9), ist.

4. Verfahren nach einem der Ansprüche 1 bis 3,
**dadurch gekennzeichnet,**
**dass** die Telekommunikationsteilnehmer-Anschlusskennung eine Telefonnummer (16) oder eine Telefaxnummer (17) oder eine E-Mail-Adresse (18) oder eine Mobilfunktelefonnummer (23) oder eine Telekommunikationsteilnehmer-Universal-Telefonnummer (27) ist.

5. Verfahren nach einem der Ansprüche 1 bis 4,
**dadurch gekennzeichnet,**
**dass** die Sucheinrichtung (10) mit der Korrespondenzdatei (15, 21, 22) in einer Einrichtung (NMC, HLR) des Telekommunikationsnetzes (6, 7, 8, 9 angeordnet ist.

6. Verfahren nach Anspruch 5,
**dadurch gekennzeichnet,**
**dass** die Sucheinrichtung (10) mit der Korrespondenzdatei (15, 21, 22) im NMC oder in den HLR des Mobilfunknetzes (6, 7, 8, 9) angeordnet ist.

7. Verfahren nach einem der Ansprüche 1 bis 6,
**dadurch gekennzeichnet,**
**dass** die Anfragedaten (11 bis 13) Name und/oder Adresse des gesuchten Telekommunikationsteilnehmers (5) betreffen.

8. Verfahren nach einem der Ansprüche 1 bis 7,
**dadurch gekennzeichnet,**
**dass** das Endgerät (2, 3) WAP-kompatibel ausgebildet ist und arbeitet.

9. Verfahren nach einem der Ansprüche 1 bis 8,
**dadurch gekennzeichnet,**
**dass** das Mobilfunknetz (6, 7, 8, 9) WAP-kompatibel ausgebildet ist und arbeitet.

10. Verfahren nach einem der Ansprüche 1 bis 9,
**dadurch gekennzeichnet,**
**dass** nach Auffinden von Telekommunikationsteilnehmer-Anschlusskennungen (16 bis 18, 23, 27) von mehreren Telekommunikationsteilnehmern (1, 5, ...) diese gefundenen Telekommunikationsteilnehmer-Anschlusskennungen (16 bis 18, 23, 27) an den anfragenden Telekommunikationsteilnehmer (1) übermittelt werden.

11. Verfahren nach Anspruch 10,
**dadurch gekennzeichnet,**
**dass** die gefundenen Telekommunikationsteilnehmer-Anschlusskennungen (16 bis 18, 23, 27) nur übertragen werden, wenn weniger als eine vorgegebene Zahl Telekommunikationsteilnehmer-Anschlusskennungen unterschiedlicher Telekommunikationsteilnehmer gefunden wurden.

12. Verfahren nach Anspruch 10 oder Anspruch 11,
**dadurch gekennzeichnet,**
**dass** die gefundenen Telekommunikationsteilnehmer-Anschlusskennungen (16 bis 18, 23, 27) nur übertragen werden, wenn weniger als zehn Telekommunikationsteilnehmer-Anschlusskennungen unterschiedlicher Telekommunikationsteilnehmer gefunden wurden.

13. Verfahren nach einem der Ansprüche 10 bis 12,
**dadurch gekennzeichnet,**
**dass** im Falle des Auffindens von Telekommunikationsteilnehmer-Anschlusskennungen von mehr als einer vorgegebenen Zahl von Telekommunikationsteilnehmern der anfragende Telekommunikationsteilnehmer zur Eingabe weiterer Anfragedaten aufgefordert wird.

14. Verfahren nach einem der Ansprüche 1 bis 13,
**dadurch gekennzeichnet,**
**dass** eine Suche in der Sucheinrichtung (10) in einer allen Telekommunikationsteilnehmern (1, 5) oder zumindest einer Vielzahl von Telekommunikationsteilnehmern zugänglichen allgemeinen Korrespondenzdatei (Telefonbuch 15) erfolgt.

15. Verfahren nach einem der Ansprüche 1 bis 14,
**dadurch gekennzeichnet,**
**dass** eine Suche in der Sucheinrichtung (10) in einer nur dem anfragenden Telekommunikationsteilnehmer (1) und/oder von ihm autorisierten Telekommunikationsteilnehmern zugänglichen persönlichen Korrespondenzdatei (Telefonbuch 21, 22) erfolgt.

16. Verfahren nach einem der Ansprüche 1 bis 15,
**dadurch gekennzeichnet,**
**dass** der Zugang zu der persönlichen Korrespondenzdatei (Telefonbuch 21, 22) eines Telekommunikationsteilnehmers aufgrund der bei einer Anfrage (6) übermittelten (CLIP) Telekommunikationsteilnehmer-Anschlusskennung gestattet oder versagt wird.

17. Verfahren nach Anspruch 16,
**dadurch gekennzeichnet,**
**dass** die Telekommunikationsteilnehmer-Anschlusskennung eine Mobilfunktelefonnummer, Festnetznummer oder E-Mail-Adresse ist.

18. Verfahren nach einem der Ansprüche 1 bis 17,
**dadurch gekennzeichnet,**
**dass** einem Telekommunikationsteilnehmer (1) der Zugriff auf seine persönliche Korrespondenzdatei (Telefonbuch 21) gestattet wird, wenn er der Sucheinrichtung (10) oder einer anderen Einrichtung ein zutreffendes Passwort (Code-Wort) übermittelt.

19. Verfahren nach einem der Ansprüche 1 bis 18,
**dadurch gekennzeichnet,**
**dass** der anfragende Telekommunikationsteilnehmer (1) automatisch oder nach Rückfrage mit dem einen gefundenen Telekommunikationsteilnehmer (5) verbunden wird.

20. Verfahren nach einem der Ansprüche 1 bis 19,
**dadurch gekennzeichnet,**
**dass** die Anfrage über einen Mobilfunkdatenkanal erfolgt.

21. Verfahren nach einem der Ansprüche 1 bis 20,
**dadurch gekennzeichnet,**
**dass** die Anfrage (6) über einen Mobilfunk-Kurznachrichtenkanal (SMS-PTP 5) übertragen wird.

22. Verfahren nach einem der Ansprüche 1 bis 21,
**dadurch gekennzeichnet,**
**dass** die Anfrage über einen Internetkanal übertragen wird.

23. Verfahren nach einem der Ansprüche 1 bis 22,
**dadurch gekennzeichnet,**
**dass** die Antwort (40) über einen Mobilfunkdatenkanal übertragen wird.

24. Verfahren nach einem der Ansprüche 1 bis 22,
**dadurch gekennzeichnet,**
**dass** die Antwort (40) über einen Mobilfunk-Kurznachrichtenkanal übertragen wird.

25. Verfahren nach einem der Ansprüche 1 bis 24,
**dadurch gekennzeichnet,**
**dass** die Antwort (40) per Internet rückübertragen wird.

26. Verfahren nach einem der Ansprüche 1 bis 25,
**dadurch gekennzeichnet,**
**dass** die Antwort (40) per Festnetz rückübertragen wird.

27. Verfahren nach einem der Ansprüche 1 bis 26,
**dadurch gekennzeichnet,**
**dass** die Sucheinrichtung (10) über unterschiedliche Telekommunikationskanäle für Anfragen zugreifbar ist.

28. Verfahren nach Anspruch 27,
**gekennzeichnet durch**
Festnetz, Mobilfunk, Internet-E-Mail als Telekommunikationskanäle.

29. Verfahren nach einem der Ansprüche 1 bis 28,
**dadurch gekennzeichnet,**
**dass** die Korrespondenzdateien (15, 21, 22) auch Namen und/oder Adressen von Telekommunikationsteilnehmern (1,5) enthalten.

30. Sucheinrichtung (10) für ein Telekommunikationsnetz (6, 7, 8, 9-zur Durchführung des Verfahrens nach einem der Ansprüche 1 bis 29, mit mindestens einer allgemeinen Korrespondenzdatei (15) und/oder persönlichen Korrespondenzdatei (21, 22) in einer über das Telekommunikationsnetz (6, 7, 8, 9) zugreifbaren Datenbank (14),
- wobei die Sucheinrichtung (10) zur Suche in diesen Korrespondenzdateien (15, 21, 22) ausgebildet ist, wobei die Korrespondenzdateien (15, 21, 22) zumindest Telekommunikationsteilnehmer-Anschlusskennungen von Telekommunikationsteilnehmern enthalten,
- mit einem Eingang (30) für Anfragedaten umfassende Anfragen eines Telekommunikationsteilnehmers, wobei die Anfragedaten einen anderen Telekommunikationsteilnehmer (5) betreffen, zu welchem zur Anfrage (6) passende Antwortdaten (5) in der Sucheinrichtung (10) recherchiert werden sollen,
- mit einer Ausgabeeinrichtung (31) zum Ausgeben (über 9, 8, 5) von von der Sucheinrichtung (10) in einer Korrespondenzdatei (15, 21, 22) gefundenen, zur Anfrage (6) passenden Antwortdaten (16 bis 18, 23, 27) betreffend eine Telekommunikationsteilnehmer-Kennung eines Telekommunikationsteilnehmers (5),
**dadurch gekennzeichnet,**
**dass** die Sucheinrichtung (10) eine Kopiereinrichtung (33) zum Kopieren aufweist, welche so ausgebildet ist, dass die Kopiereinrichtung (33) zu einer Anfrage (4) eines Telekommunikationsteilnehmers (1) gefundene Antwortdaten in einer allgemein zugänglichen Korrespondenzdatei (15) automatisch oder nach Genehmigung des anfragenden Telekommunikationsteilnehmers (1) in dessen persönliche Korrespondenzdatei (21) im Telekommunikationsnetz (6, 7, 8, 9) kopiert.

31. Sucheinrichtung (10) nach Anspruch 30,
**dadurch gekennzeichnet,**
**dass** die Sucheinrichtung (10) in einer telekommunikationsnetzseitigen Einrichtung (HLR, NMC) angeordnet oder vom Telekommunikationsnetz (6, 7, 8, 9) zugänglich ist.

32. Sucheinrichtung (10) nach Anspruch 30 oder Anspruch 31,
**dadurch gekennzeichnet,**
**dass** mindestens eine Korrespondenzdatei eine nur einem Telekommunikationsteilnehmer (1) oder von diesem autorisierten weiteren Telekommunikationsteilnehmern zugängliche persönliche Korrespondenzdatei (21) ist und die Sucheinrichtung (10) eine Zugangskontrolleinrichtung (32) zur Überprüfung der Zugangsberechtigung eines anfragenden Telekommunikationsteilnehmers (1) zu einer persönlichen bestimmten Korrespondenzdatei (21) aufweist.

33. Sucheinrichtung (10) nach Anspruch 32,
**dadurch gekennzeichnet,**
**dass** die Zugangskontrolleinrichtung (32) so ausgebildet ist, dass sie einen Zugang zu einer persönlichen Korrespondenzdatei (21) nur bei Übermittlung einer mit einer Vorgabe übereinstimmenden Telekommunikationsteilnehmer- Anschlusskennung des anfragenden Telekommunikationsteilnehmers (1) (per CLIP) und/oder bei Eingabe eines vorgegebenen zutreffenden Passwortes zulässt.

## Claims

1. A method for determining a telecommunication subscriber connection identifier (16, 17, 18, 23) of a telecommunication subscriber (5) for an inquiring other telecommunication subscriber (1) comprising
a telecommunication terminal (2, 3), the telecommunication subscriber (1) who inquires (6) about this (16 to 18, 23) initiating
a search (10) of inquiry data (11, 12) contained in the inquiry (6) of the inquiring telecommunication subscriber (1) and relating to the wanted telecommunication subscriber (5)
in a general correspondence file (15) and/or personal correspondence file (21, 22) containing at least telecommunication subscriber connection identifiers (16, 17, 18, 23, 27) of telecommunication subscribers (1, 5,...) in a data base (14) which is accessible via a telecommunication network (6, 7, 8, 9),
wherein the inquiry (4) of the inquiring telecommunication subscriber (1) will be transmitted from the terminal (2, 3) of this one via the telecommunication network (6, 7, 8, 9) to a search device (10) comprising the correspondence file (15; 21; 22),
whereupon the search device (10) will transmit the at least one telecommunication subscriber connection identifier (16 to 18, 23, 27) which matches the inquiry (4) as response (40) to a telecommunication terminal (2, 3) of the inquiring telecommunication subscriber (1) for being displayed for the telecommunication subscriber (1),
**characterized in**
**that** response data (16 to 18, 23) or complete entries (11, 12, 13, 21, 16, 17, 18, 23, 27, 4) containing these ones and comprised in the inquired and searched general correspondence file (15), which response data or entries have been found during the search (10) after an inquiry (6) of a telecommunication subscriber (1), will be copied automatically or only upon questioning the telecommunication subscriber (1) into his private personal correspondence file (directory 21), which is only accessible to him, in the telecommunication network (6, 7, 8, 9).

2. A method according to claim 1,
**characterized in**
**that** the transmission of the inquiry (6) from the terminal (2, 3) of the inquiring telecommunication subscriber (1) to the search device (10) in or at the telecommunication network (6, 7, 8, 9) as well as the search and furthermore the transmission of the response (40) are carried out in a completely automatic manner without any interposition of intermediate steps executed by people.

3. A method according to claim 1 or claim 2,
**characterized in**
**that** the terminal is a GSM compatible and/or UMTS compatible and/or WAP compatible mobile terminal (2, 3) and that the telecommunication network is a GSM compatible and/or UMTS compatible and/or WAP compatible mobile radio network (6, 7, 8, 9).

4. A method according to one of the claims 1 to 3,
**characterized in**
**that** the telecommunication subscriber connection identifier is a telephone number (16) or a telefax number (17) or an email address (18) or a mobile telephone number (23) or a telecommunication subscriber universal telephone number (27).

5. A method according to one of the claims 1 to 4,
**characterized in**
**that** the search device (10) comprising the correspondence file (15, 21, 22) is arranged in a device (NMC, HLR) of the telecommunication network (6, 7, 8, 9).

6. A method according to claim 5,
**characterized in**
**that** the search device (10) comprising the correspondence file (15, 21, 22) is arranged in the NMC or in the HLR of the mobile radio network (6, 7, 8, 9).

7. A method according to one of the claims 1 to 6,
**characterized in**
**that** the inquiry data (11 to 13) relate to name and/or address of the wanted telecommunication subscriber (5).

8. A method according to one of the claims 1 to 7,
**characterized in**
**that** the terminal (2, 3) is WAP compatible and functions in a WAP compatible manner.

9. A method according to one of the claims 1 to 8,
**characterized in**
**that** the mobile radio network (6, 7, 8, 9) is WAP compatible and functions in a WAP compatible manner.

10. A method according to one of the claims 1 to 9,
**characterized in**
**that** after having found telecommunication subscriber connection identifiers (16 to 18, 23, 27) of several telecommunication subscribers (1, 5, ...) these found telecommunication subscriber connection identifiers (16 to 18, 23, 27) will be transmitted to the inquiring telecommunication subscriber (1).

11. A method according to claim 10,
**characterized in**
**that** the found telecommunication subscriber connection identifiers (16 to 18, 23, 27) will only be transmitted, if less than a predefined number of telecommunication subscriber connection identifiers of different telecommunication subscribers have been found.

12. A method according to claim 10 or claim 11,
**characterized in**
**that** the found telecommunication subscriber connection identifiers (16 to 18, 23, 27) will only be transmitted, if less than ten telecommunication subscriber connection identifiers of different telecommunication subscribers have been found.

13. A method according to one of the claims 10 to 12,
**characterized in**
**that** in case of finding telecommunication subscriber connection identifiers of more than a predefined number of telecommunication subscribers, the inquiring telecommunication subscriber will be requested to enter other inquiry data.

14. A method according to one of the claims 1 to 13,
**characterized in**
**that** a search is carried out in the search device (10) in a general correspondence file (directory 15) which is accessible to all telecommunication subscribers (1, 5) or to at least a multitude of telecommunication subscribers.

15. A method according to one of the claims 1 to 14,
**characterized in**
**that** a search is carried out in the search device (10) in a personal correspondence file (directory 21, 22) which is only accessible to the inquiring telecommunication subscriber (1) and/or to telecommunication subscribers who have been authorized by him.

16. A method according to one of the claims 1 to 15,
**characterized in**
**that** the access to the personal correspondence file (directory 21, 22) of a telecommunication subscriber will be permitted or denied on the basis of the telecommunication subscriber connection identifier transmitted (CLIP) with an inquiry (6).

17. A method according to claim 16,
**characterized in**
**that** the telecommunication subscriber connection identifier is a mobile phone number, a landline number or an email address.

18. A method according to one of the claims 1 to 17,
**characterized in**
**that** a telecommunication subscriber (1) is allowed to gain access to his personal correspondence file (directory 21), if he transmits a correct pass word (code word) to the search device (10) or another device.

19. A method according to one of the claims 1 to 18,
**characterized in**
**that** the inquiring telecommunication subscriber (1) will be connected to the one found telecommunication subscriber (5) automatically or after questioning him.

20. A method according to one of the claims 1 to 19,
**characterized in**
**that** the inquiry will take place via a mobile radio data channel.

21. A method according to one of the claims 1 to 20,
**characterized in**
**that** the inquiry (6) will be transmitted via a mobile radio short messages channel (SMS PTP 5).

22. A method according to one of the claims 1 to 21,
**characterized in**
**that** the inquiry will be transmitted via an internet channel.

23. A method according to one of the claims 1 to 22,
**characterized in**
**that** the response (40) will be transmitted via a mobile radio data channel.

24. A method according to one of the claims 1 to 22,
**characterized in**
**that** the response (40) will be transmitted via a mobile radio short messages channel.

25. A method according to one of the claims 1 to 24,
**characterized in**
**that** the response (40) will be retransmitted via internet.

26. A method according to one of the claims 1 to 25,
**characterized in**
**that** the response (40) will be retransmitted via fixed network.

27. A method according to one of the claims 1 to 26,
**characterized in**
**that** the search device (10) is accessible for inquiries via different telecommunication channels.

28. A method according to claim 27,
**characterized by**
the fixed network, mobile radio, internet email as telecommunication channels.

29. A method according to one of the claims 1 to 28,
**characterized in**
**that** the correspondence files (15, 21, 22) also contain names and/or addresses of telecommunication subscribers (1, 5).

30. A search device (10) for a telecommunication network (6, 7, 8, 9) for carrying out the method according to one of the claims 1 to 29, comprising at least one general correspondence file (15) and/or personal correspondence file (21, 22) in a data base (14) which is accessible via the telecommunication network,
- wherein the search device (10) is configured for searching in these correspondence files (15, 21, 22), wherein the correspondence files (15, 21, 22) at least contain telecommunication subscriber connection identifiers of telecommunication subscribers,
- comprising an entry (30) for inquiries of a telecommunication subscriber comprising inquiry data, wherein the inquiry data relate to another telecommunication subscriber (5), with respect to whom response data (5) relating to the inquiry shall be researched in the search device (10),
- comprising an output device (31) for outputting (via 9, 8, 5) response data (16 to 18, 23, 27) which relate to the inquiry (6) and have been found by the search device (10) in a correspondence file (15, 21, 22) and which refer to a telecommunication subscriber connection identifier of a telecommunication subscriber (5),
**characterized in**
**that** the search device (10) comprises a copying device (33) for copying, which is configured such that the copying device (33) will copy response data, which have been found with respect to an inquiry (4) of a telecommunication subscriber (1) in a generally accessible correspondence file (15), automatically or after obtaining the authorization of the inquiring telecommunication subscriber (1) into his personal correspondence file (21) in the telecommunication network (6, 7, 8, 9).

31. A search device (10) according to claim 30,
**characterized in**
**that** the search device (10) is arranged in a device (HLR, NMC) of the telecommunication network or is accessible by the telecommunication network (6, 7, 8, 9).

32. A search device (10) according to claim 30 or claim 31,
**characterized in**
**that** at least one correspondence file is a personal correspondence file (21) which is only accessible for one telecommunication subscriber (1) or for other telecommunication subscribers who have been authorized by this one and the search device (10) comprises an access control device (32) for checking the access authorization of an inquiring telecommunication subscriber (1) with respect to a particular personal correspondence file (21).

33. A search device (10) according to claim 32,
**characterized in**
**that** the access control device (32) is configured such that it only allows an access to a personal correspondence file (21) if a telecommunication subscriber connection identifier of the inquiring telecommunication subscriber (1), which coincides with a specification, is transmitted (via CLIP) and/or if a predefined correct pass word is entered.

## Revendications

1. Procédé de détermination d'un identifiant de connexion d'abonné de télécommunication (16, 17, 18, 23) d'un abonné de télécommunication (5) pour un autre abonné de télécommunication demandant (1) comprenant un terminal de télécommunication (2, 3), l'abonné de télécommunication (1), qui demande (6) cela (16 à 18, 23) initiant
une recherche (10) des données de demande (11, 12) contenues dans la demande (6) de l'abonné de télécommunication (1) demandant et concernant l'abonné de télécommunication recherché (5)
dans un fichier de correspondance général (15) et/ou un fichier de correspondance personnel (21, 22) contenant au moins des identifiants de connexion d'abonnés de télécommunication (16, 17, 18, 23, 27) des abonnés de télécommunication (1, 5, ...) dans une base de données (14), qui est accessible via un réseau de télécommunication (6, 7, 8, 9),
dans lequel la demande (4) de l'abonné de télécommunication demandant (1) est transmise du terminal (2, 3) de celui-ci via le réseau de télécommunication (6, 7, 8, 9) à un dispositif de recherche (10) comprenant le fichier de correspondance (15 ; 21, 22),
après quoi le dispositif de recherche (10) transmet l'au moins un identifiant de connexion d'abonné de télécommunication (16 à 18, 23, 27), qui correspond à la demande, comme réponse (40) à un terminal de télécommunication (2, 3) de l'abonné de télécommunication demandant (1) pour y être affiché pour l'abonné de télécommunication (1),
**caractérisé en ce**
**que** des données de réponse (16 à 18, 23) ou des entrées complètes (11, 12, 13, 21, 16, 17, 18, 23, 27, 4) contenant celles-ci et comprises dans le fichier de correspondance général (15) demandé et fouillé, lesquelles données ou entrées ont été trouvées pendant une recherche après une demande (6) d'un abonné de télécommunication (1), sont copiées automatiquement ou seulement après consultation de l'abonné de télécommunication (1) dans le fichier de correspondance personnel et privé (répertoire téléphonique 21), qui n'est accessible qu'à lui, dans le réseau de télécommunication (6, 7, 8, 9).

2. Procédé selon la revendication 1,
**caractérisé en ce**
**que** la transmission de la demande (6) du terminal de l'abonné de télécommunication demandant (1) au dispositif de recherche (10) dans le réseau de télécommunication (6, 7, 8, 9) ainsi que la recherche et de plus la transmission de la réponse (40) se font d'une manière complètement automatique sans interposition des étapes intermédiaires effectuées par des personnes.

3. Procédé selon la revendication 1 ou la revendication 2,
**caractérisé en ce**
**que** le terminal est un terminal mobile (2, 3) compatible avec GSM et/ou avec UMTS et/ou avec WAP et que le réseau de télécommunication est un réseau radio mobile (6, 7, 8, 9) compatible avec GSM et/ou avec UMTS et/ou avec WAP.

4. Procédé selon l'une des revendications 1 à 3,
**caractérisé en ce**
**que** l'identifiant de connexion d'abonné de télécommunication est un numéro de téléphone (16) ou un numéro de téléfax (17) ou une adresse email (18) ou un numéro de téléphone mobile (23) ou un numéro de téléphone universel d'abonné de télécommunication (27).

5. Procédé selon l'une des revendications 1 à 4,
**caractérisé en ce**
**que** le dispositif de recherche (10) comprenant le fichier de correspondance (15, 21, 22) est disposé dans un dispositif (NMC, HLR) du réseau de télécommunication (6, 7, 8, 9).

6. Procédé selon la revendication 5,
**caractérisé en ce**
**que** le dispositif de recherche (10) comprenant le fichier de correspondance (15, 21, 22) est disposé dans le NMC ou dans les HLR du réseau radio mobile (6, 7, 8, 9).

7. Procédé selon l'une des revendications 1 à 6,
**caractérisé en ce**
**que** les données de demande (11 à 13) concernent le nom et/ou l'adresse de l'abonné de télécommunication recherché (5).

8. Procédé selon l'une des revendications 1 à 7,
**caractérisé en ce**
**que** le terminal (2, 3) est compatible avec WAP et fonctionne de manière compatible avec WAP.

9. Procédé selon l'une des revendications 1 à 8,
**caractérisé en ce**
**que** le réseau radio mobile (6, 7, 8, 9) est compatible avec WAP et fonctionne de manière compatible avec WAP.

10. Procédé selon l'une des revendications 1 à 9,
**caractérisé en ce**
**qu'**après avoir trouvé des identifiants de connexion d'abonné de télécommunication (16 à 18, 23, 27) de plusieurs abonnés de télécommunication (1, 5 ...), ces identifiants de connexion d'abonné de télécommunication (16 à 18, 23, 27) sont transmis à l'abonné de télécommunication demandant (1).

11. Procédé selon la revendication 10,
**caractérisé en ce**
**que** les identifiants de connexion d'abonné de télécommunication (16 à 18, 23, 27) trouvés ne sont transmis que si un nombre inférieur à un nombre prédéterminé d'identifiants de connexion d'abonné de télécommunication des abonnés de télécommunication différents a été trouvé.

12. Procédé selon la revendication 10 ou la revendication 11,
**caractérisé en ce**
**que** les identifiants de connexion d'abonné de télécommunication (16 à 18, 23, 27) trouvés ne sont transmis que si moins de dix identifiants de connexion d'abonné de télécommunication des abonnés de télécommunication différents ont été trouvés.

13. Procédé selon l'une des revendications 10 à 12,
**caractérisé en ce**
**que** si des identifiants de connexion d'abonné de télécommunication d'un nombre supérieur à un nombre prédéterminé d'abonnés de télécommunication sont trouvés, l'abonné de télécommunication demandant sera invité à entrer d'autres données de demande.

14. Procédé selon l'une des revendications 1 à 13,
**caractérisé en ce**
**qu'**une recherche est effectuée dans le dispositif de recherche (10) dans un fichier de correspondance général (répertoire téléphonique 15), qui est accessible à tous les abonnés de télécommunication (1, 5) ou au moins à une pluralité d'abonnés de télécommunication.

15. Procédé selon l'une des revendications 1 à 14,
**caractérisé en ce**
**qu'**une recherche est effectuée dans le dispositif de recherche (10) dans un fichier de correspondance personnel (répertoire téléphonique 21, 22), qui n'est accessible qu'à l'abonné de télécommunication demandant (1) et/ou qu'à des abonnés de télécommunication autorisés par lui.

16. Procédé selon l'une des revendications 1 à 15,
**caractérisé en ce**
**que** l'accès au fichier de correspondance personnel (répertoire téléphonique 21, 22) d'un abonné de télécommunication est permis ou refusé sur la base de l'identifiant de connexion d'abonné de télécommunication transmis (CLIP) avec une demande (6).

17. Procédé selon la revendication 16,
**caractérisé en ce**
**que** l'identifiant de connexion d'abonné de télécommunication est un numéro de téléphone mobile, un numéro de téléphone fixe ou une adresse email.

18. Procédé selon l'une des revendications 1 à 17,
**caractérisé en ce**
**qu'**il est permis à l'abonné de télécommunication (1) d'accéder à son fichier de correspondance personnel (répertoire téléphonique 21), s'il transmet un mot de passe correct (mot de code) au dispositif de recherche (10) ou à un autre dispositif.

19. Procédé selon l'une des revendications 1 à 18,
**caractérisé en ce**
**que** l'abonné de télécommunication demandant (1) est connecté automatiquement ou après consultation avec celui-ci à l'un abonné de télécommunication (5) trouvé.

20. Procédé selon l'une des revendications 1 à 19,
**caractérisé en ce**
**que** la demande se fait via un canal de données de communications mobiles.

21. Procédé selon l'une des revendications 1 à 20,
**caractérisé en ce**
**que** la demande (6) est transmise via un canal de brefs messages de communications mobiles (SMS-PTP 5).

22. Procédé selon l'une des revendications 1 à 21,
**caractérisé en ce**
**que** la demande est transmise via un canal d'Internet.

23. Procédé selon l'une des revendications 1 à 22,
**caractérisé en ce**
**que** la réponse (40) est transmise via un canal de données de communications mobiles.

24. Procédé selon l'une des revendications 1 à 22,
**caractérisé en ce**
**que** la réponse (40) est transmise via un canal de brefs messages de communications mobiles.

25. Procédé selon l'une des revendications 1 à 24,
**caractérisé en ce**
**que** la réponse (40) est retransmise via l'Internet.

26. Procédé selon l'une des revendications 1 à 25,
**caractérisé en ce**
**que** la réponse (40) est retransmise via le réseau fixe.

27. Procédé selon l'une des revendications 1 à 26,
**caractérisé en ce**
**que** le dispositif de recherche (10) est accessible à des demandes via des canaux de télécommunication différents.

28. Procédé selon la revendication 27,
**caractérisé par**
le réseau fixe, la radio mobile, l'email Internet en tant que canaux de télécommunication.

29. Procédé selon l'une des revendications 1 à 28,
**caractérisé en ce**
**que** les fichiers de correspondance (15, 21, 22) contiennent aussi des noms et/ou des adresses d'abonnés de télécommunication (1, 5).

30. Dispositif de recherche (10) pour un réseau de télécommunication (6, 7, 8, 9) pour exécuter le procédé selon l'une des revendications 1 à 29, comprenant au moins un fichier de correspondance général (15) et/ou un fichier de correspondance personnel (21, 22) dans une base de données (14) accessible via le réseau de télécommunication,
- dans lequel le dispositif de recherche (10) est configuré pour la recherche dans ces fichiers de correspondance (15, 21, 22), les fichiers de correspondance (15, 21, 22) contenant au moins des identifiants de connexion d'abonné de télécommunication d'abonnés de télécommunication,
- comprenant une entrée (30) pour des demandes comprenant des données de demande d'un abonné de télécommunication, les données de demande concernant un autre abonné de télécommunication (5), par rapport à qui des données de réponse (5) correspondant à la demande (6) doivent être recherchées dans le dispositif de recherche (10),
- comprenant un dispositif de sortie (31) pour sortir (via 9, 8, 5) des données de réponse (16 à 18, 23, 27), qui correspondent à la demande' (6) et qui ont été trouvées dans un fichier de correspondance (15, 21, 22) par le dispositif de recherche (10), et qui se réfèrent à un identifiant de connexion d'abonné de télécommunication d'un abonné de télécommunication (5),
**caractérisé en ce**
**que** le dispositif de recherche (10) comprend un dispositif de copie (33) pour copier, lequel est configuré de sorte que le dispositif de copie (33) copie des données de réponse, qui ont été trouvées par rapport à la demande (4) d'un abonné de télécommunication (1) dans un fichier de correspondance (15) accessible généralement, automatiquement ou après avoir obtenu l'autorisation de l'abonné de télécommunication demandant (1) dans le fichier de correspondance personnel (21) de celui-ci dans le réseau de télécommunication (6, 7, 8, 9).

31. Dispositif de recherche (10) selon la revendication 30,
**caractérisé en ce**
**que** le dispositif de recherche (10) est disposé dans une installation (HLR, NMC) du réseau de télécommunication ou est accessible par le réseau de télécommunication (6, 7, 8, 9).

32. Dispositif de recherche (10) selon la revendication 30 ou la revendication 31,
**caractérisé en ce**
**qu'**au moins un fichier de correspondance est un fichier de correspondance personnel (21), qui n'est accessible qu'à un abonné de télécommunication (1) ou qui est accessible à d'autres abonnés de télécommunication autorisés par celui-ci, et le dispositif de recherche (10) comprend un dispositif de contrôle d'accès (32) pour vérifier l'autorisation d'accès d'un abonné de télécommunication demandant (1) par rapport à un fichier de correspondance personnel particulier (21).

33. Dispositif de recherche (10) selon la revendication 32,
**caractérisé en ce**
**que** le dispositif de contrôle d'accès (32) est configuré de sorte qu'il ne permet un accès à un fichier de correspondance personnel (21) que si un identifiant de connexion d'abonné de télécommunication de l'abonné de télécommunication demandant (1), lequel coïncide avec une spécification prédéterminée, est transmis (via CLIP) et/ou si un mot de passe correct prédéterminé est entré.
